(19) Europäisches Patentamt
European Patent Office
Office européen des brevets

(11) **EP 2 672 425 A1**

(12) **EUROPEAN PATENT APPLICATION**

(43) Date of publication:
**11.12.2013 Bulletin 2013/50**

(51) Int Cl.:
***G06K 9/00*** *(2006.01)* ***G06K 9/62*** *(2006.01)*

(21) Application number: **12171411.7**

(22) Date of filing: **08.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Realeyes OÜ**
**11615 Tallinn (EE)**

(72) Inventors:
• **Szabo, Zoltan**
**2131 Göd (HU)**

• **Jeni, Laszlo**
**1185 Budapest (HU)**
• **Takacs, Daniel**
**2092 Budakeszi (HU)**

(74) Representative: **Koppel, Mart Enn**
**KOPPEL patendibüroo OÜ**
**Roseni 10-151**
**10111 Tallinn (EE)**

(54) **Method and apparatus with deformable model fitting using high-precision approximation**

(57) A method and apparatus is provided for deformable face model fitting using constrained local models and high-precision approximation. In the original formulation of the CLM method several simplifications have been made to derive a closed form solution of the cost function. Without these simplification steps in the derivation a real cost function of the CLM method could be calculated. However, the real cost function has the disadvantage that it is not quadratic function of the model parameters, and therefore it is not computable by using a simple linear equation system. However, according to the invention, it is approximated using a second order Taylor polynomial, and that solution can be formulated by a linear equation system.

Fig 2

EP 2 672 425 A1

**Description**

**Technical Field**

The present invention relates to a method and apparatus for locating features of an object. In particular, but not exclusively, the present invention relates to a method of fitting a model (also referred to as a 3d shape model) of a class of objects, such as faces, to a target image containing an object within that class.

**Background Art**

Known is GB2360183 (A), *Image processing using parametric models, inventors Newman, et al,* describing a method and apparatus for determining a set of appearance parameters representative of the appearance of an object within an image. The system employs a parametric model which relates appearance parameters to corresponding image data of the object as well as a number of matrices, each of which relates a change in the appearance parameters to an image error between image data of the object from the image and image data generated from the appearance parameters and the parametric model. The system uses these matrices to iteratively modify an initial estimate of the appearance parameters until convergence has been reached. The parametric model is preferably obtained through a principal component analysis of shape and texture data extracted from a large number of training images.

Known is US7292737, *Unified Bayesian framework for shape registration,* inventors Zhou Yi, et al, disclosing systems and methods for shape registration are described, according to which training shape vectors are generated from images in an image database. The training shape vectors identify landmark points associated with one or more object types. A distribution of shape in the training shape vectors is represented as a prior of tangent shape in tangent shape space. The prior of tangent shape is then incorporated into a unified Bayesian framework for shape registration.

Known is WO2007116208, *Method of locating features of an object,* inventors Cristinacce and Cootes, describing a method of locating features of an object, of a class of objects, such as faces, within a target image. The method comprises initialising a set of feature points within the target image, each feature point corresponding to a predetermined feature for objects of the class of objects; deriving a set of template detectors, from the set of feature points, using a statistical model of the class of objects, each template detector comprising an area of image located about the location of a feature point for an object of the class of objects; comparing the set of template detectors with the target image; and updating the set of feature points within the target image in response to the result of the comparison.

Known is D. Cristinacce, T. Cootes, Automatic feature localisation with constrained local models, Pattern Recognition 41 (10) (2008) 3054.3067. *doi:10.1016/j.patcog.2008.01.024.,* describing a method of automatic feature localisation with constrained local models (CLM), comprising the steps of:

1. building a point distribution model (2D) from manually annotated face images

2. building template detectors to localize facial markers by

2.1. Template Selection Tracker, comprising

2.1.1 building a collection of marker-templates (cropped areas around markers)

2.1.2. during CLM fitting selecting candidate subset of templates

2.1.3. correlation based response map generation

2.2. Templated AAM (active appearance model), comprising

2.2.1. building small AAM-s from the marker-templates

2.2.2 during fitting fit the appearance model of these small AAM-s

2.2.3. generating a correlation based response map

Known is J. M. Saragih, S. Lucey, J. F. Cohn, Deformable model fitting by regularized landmark mean-shift, International Journal of Computer Vision 91 (2) (2011) 200-215*, describing a method using deformable model fitting by regularized landmark mean shift, comprising the steps:

1. building a point distribution model (3D) from manually annotated face images

2. training template detectors, using Logit regressor based template detector or using Support Vector Machine based template detector;

3. calculating response map using the template detectors

4. applying the regularized landmark mean-shift.

Also known is J. M. Saragih, S. Lucey, J. F. Cohn, Deformable model fitting by regularized landmark mean-shift, International Journal of Computer Vision 91 (2) (2011) 200-215*, describing a method of using simplified cost function of the CLM fitting by assuming several simplifications.

Also known is Rowley, H., Baluja, S., Kanade, T.: Neural network-based face detection. IEEE Trans. Pattern Anal. Mach. Intell. 20(1), 23-38 (1998), describing a method using multilayer neural network for detecting full faces with different rotations and other transformations. According to the method, the neural network is trained directly on the image pixels, to partition the image subwindows into face/non-face regions. This method models the face as a 20*20 pixel template. Again each extracted subwindow is pre-processed using lighting correction and histogram equalisation. A Multi-Layer Perceptron (MLP) is then applied to the normalised subwindow to classify the region as a face or non-face.

Also known is S. Duffner and C. Garcia, "A Connexionist Approach for Robust and Precise Facial Feature Detection in Complex Scenes," Image and Signal Processing and Analysis, 2005, proposing a neural architecture is a specific type of neural network consisting of six layers where the first layer is the input layer, the three following layers are convolutional layers and the last two layers are standard feed-forward neuron layers. The system transforms a raw input face image into a desired output feature maps where facial features are highlighted.

Also known is T. Senechal, L. Prevost, and S. Hanif, "Neural Network Cascade for Facial Feature Localization," Fourth Int'l Workshop on Artificial Neural Networks in Pattern Recognition (ANNPR '10), p. 141, 2010, describing a method using cascade neural networks for facial landmark localization, comprising using a Viola and Jones detector to detect the face, then localizing facial markers using a cascade of neural networks and applying a course to fine approach: the first network localizing the facial regions (eye, mouth, etc) and then local networks localizing markers within these regions. No underlying point distribution model is used.

Also known is Yang Whang, Simon Lucey, Jeffrey F. Cohn: Enforcing Convexity for Improved Alignment with Constrained Local Models, 2008. CVPR 2008. IEEE Conference on Computer Vision and Pattern Recognition, p 1-8., describing a method for optimizing the global warp update in an efficient manner by enforcing convexity at each local patch response surface.

Also known is *Ulrich Paquet: Convexity and Bayesian Constrained Local Models, CVPR (Computer Vision and Pattern Recognition) 2009,* disclosing use of Bayesian CLM.

## Summary of invention

The main aspect of the invention is an improved CLM based method, using Taylor approximation of the cost function. In the original formulation of the CLM method several simplifications have been made to derive a closed form solution of the cost function. Without these simplification steps in the derivation a real cost function of the CLM method could be calculated. However, the real cost function has the disadvantage that it is not quadratic function of the model parameters, and therefore it is not computable by using a simple linear equation system. However, according to the invention, it is approximated using a second order Taylor polynomial, and that solution can be formulated by a linear equation system. The calculation of the Taylor-polynomial approximated real cost function is slightly more time-consuming than for the simplified cost function, however, in certain configuration it converges in less steps and provides smaller fitting error.

## Brief description of drawings

Fig 1 depicts the general framework for CLM methods;

Fig 2 depicts a modified CLM model based method with using the Taylor approximation of the real cost function.

## Description of embodiments

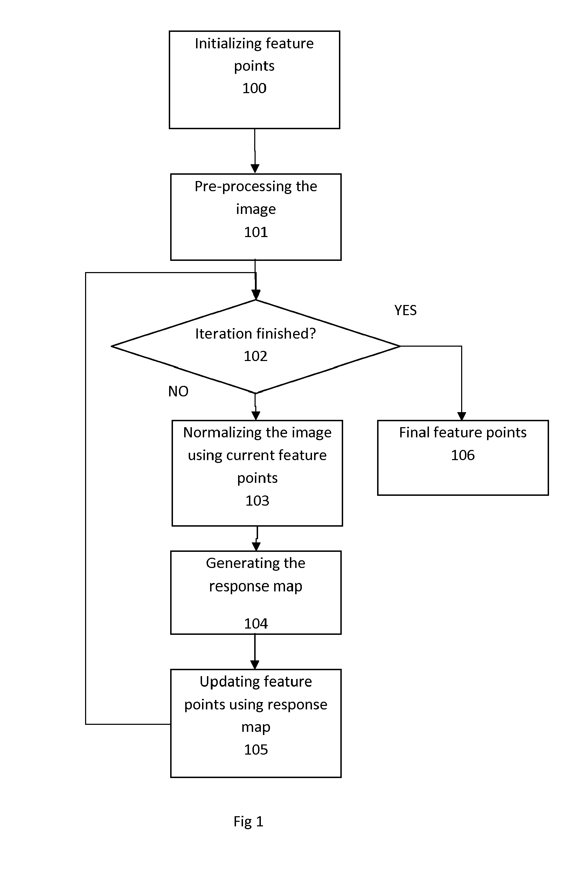

The general CLM framework is depicted in Fig 1.

<u>CLM overview</u>

Constrained Local Models (CLM) are generative parametric models for person-independent face alignment. A 3D CLM method is used, where the shape model is defined by a 3D mesh and in particular the 3D vertex locations of the mesh, called landmark points.

The general framework of the CLM method as described in Fig 1 comprises the steps of:

initializing feature points of the face 100, each feature point corresponding to a pre-determined facial feature;

pre-processing the image 101, e.g., by standard image pre-processing for reducing the effects of lighting from different directions, and for reducing camera or compression noise, e.g., by using adaptive histogram equalization;

determining if the iterative process is completed 102 (e.g., the feature points of subsequent iterations are close enough);

normalizing the image 103, e.g., by rotating the image to 0 degrees roll rotation (this is a rotation in the image plane), and scaling it to have a unit scale;

generating a response map 104, e.g., by using an exhaustive local search performed in a given region around each landmark;

updating the feature points using response map 105, and outputting the final feature points 106.

Consider the shape of a 3D CLM as the coordinates of 3D vertices of the M landmark points: $\mathbf{x} = (x_1, y_1, z_1, ..., x_M, y_M, z_M)^T$, or, $\mathbf{x} = (x^T_1, ..., x^T_M)^T$, where $x_i = (x_i, y_i, z_i)^T$. We have N samples: $\{\mathbf{x}^{(n)}\}$. CLM models assume that - apart from the global transformations; scale, rotation, and translation - all $\{\mathbf{x}^{(n)}\}$ can be approximated by means of the linear principal component analysis (PCA) forming the PCA subspace.

The 3D point distribution model (PDM) describes non-rigid shape variations linearly and composes it with a global rigid transformation, placing the shape in the image frame: $x_i(p) = sPR(\underline{x_i} + \Phi_i q) + t$, where $i = 1, ... ,M$, $x_i(p)$ denotes the 2D location of the $i^{th}$ landmark subject to transformation p, and $p = \{s, \alpha, \beta, \gamma, q, t\}$ denotes the parameters of the model, which consist of a global scaling s, angles of rotation in three dimensions ($R = R1(\alpha)R2(\beta)R3(\gamma)$), translation t and non-rigid transformation q. Here $\underline{x_i}$ is the mean location of the $i^{th}$ landmark averaged over the database. Columns of $\Phi$ form the orthogonal projection matrix of principal component analysis and its compression dimension is d. Finally, matrix P denotes the projection matrix to 2D.

CLM is constrained through the PCA of PDM. It works with local experts, whose opinion is considered independent and are multiplied to each other. Local experts are trained on labelled samples.

The constraints of the PDM and the response map of the local expert in an appropriate neighbourhood - can be used to express the cost function of the fitting. Expectation maximization (EM) can be used to find the (local) optimum.

While the CLM method is highly robust for interpersonal and intrapersonal variations of the face, however the registration precision is still limited to the training set of faces used to build the model. Certain face configurations that are not present in the training set are difficult to register and track. The limited ability to generalize the face component limits the fi tting performance in terms of accuracy.

<u>Taylor - CLM</u>

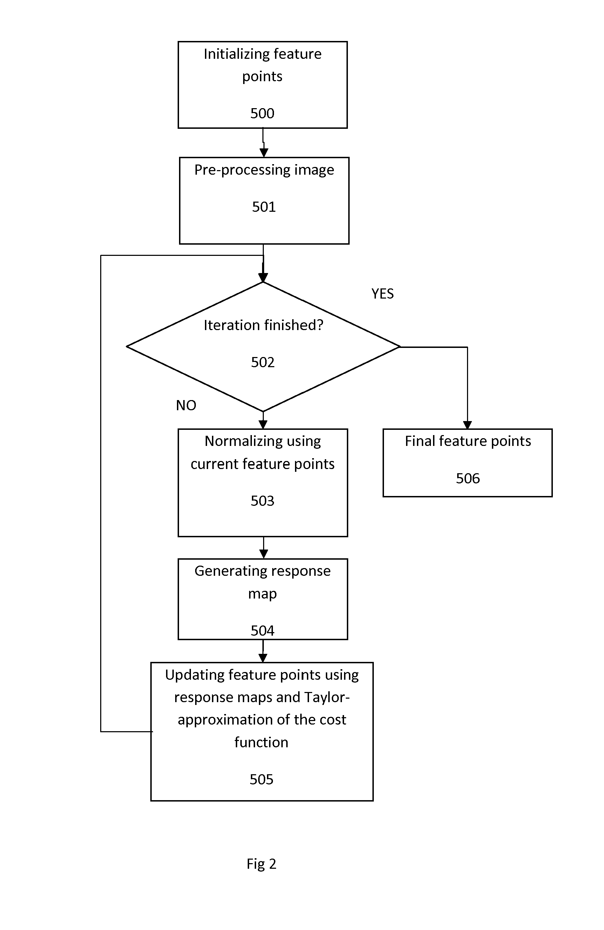

According to another embodiment, depicted in Fig 2, the CLM based method further comprises using Taylor approximation for optimizing the cost function.

The method according to this embodiment also includes the steps of initializing feature points of the face 500 and pre-processing the image 501. The iterative process as in general CLM method is performed, comprising the steps of determining if the iteration is completed 502, normalizing using current feature points 503, generating response map 504. The step of updating feature points using response map 505 is modified to use Taylor-approximation of the cost function. Final feature points are outputted in step 506.

Constrained Local Models as generative parametric models for person - independent face alignment apply region templates and use fast gradient algorithms in order to optimize the cost function.

During the fitting process our task is to optimize the CLM cost function:

$$Q(\Delta p|p) = |p + \Delta p|_{\tilde{A}}^2{}_l - \sum_i \sum_{p_i} \frac{w_{y_i}}{\rho} \, |(x_i^c + J_i \Delta p) - y_i\|^2 \to \min_{\Delta \mathbf{p}}.$$

In this equation p denotes the parameters as described in paragraph [0040]), $J_i$ the Jacobi matrices, w denotes the weights and p a CLM parameter.

In the original formulation of the CLM method several simplifications has been made to derive a closed form solution of the cost function. Without these simplification steps in the derivation the real cost function of the CLM method could be received.

The real cost function has the disadvantage that it is not quadratic in the function of the model parameters, therefore it is not computable by using a simple linear equation system. However, we can approximate this function using a second order Taylor-polynomial, and that solution can be formulated by a linear equation system.

The equation for the parameter update - using the real cost function - can be written up in the following form:

$$- \left[ \rho \tilde{A}^{-1} + \mathbf{J}^T \mathbf{J} + \rho c_2 f''(0) \right] \Delta \mathbf{p} = \rho \tilde{A}^{-1} p - \mathbf{J}^T \mathbf{v} + \rho c_1 [f'(0)]^T$$

The calculation of the approximated real cost function slightly more time-consuming than the simplified cost function, however, in certain configurations it converges in less steps and provides smaller fitting error.

Embodiments of the present invention are suitable for image interpretation tasks, for which it is necessary to automatically and accurately locate feature points. Such image interpretation tasks include amongst many others face recognition and medical diagnosis. Embodiments of the present invention have particular advantages in face localisation and recognition in static images. This can be particularly important for security applications automatic editing of face images. Furthermore, due to the inherent object tracking mechanism of the searching method of certain embodiments of the present, the searching method is particularly suited to face tracking and recognition in video sequences (particularly when the current feature points for a new frame are initialised to the converged feature points for the preceding frame).

While embodiments of the present invention have primarily been exemplified with reference to the modelling of faces, it is in no way limited to this. Embodiments of the present invention can be applied for modelling and identifying features of a wide range of classes of object. Embodiments of the present invention are particularly suited to modelling and identifying features classes of objects for which there exists distinctive and corresponding landmarks between different instances of the objects.

**Claims**

1. A method of modelling the visual appearance of a human face, within a target image, the method comprising: initialising a set of feature points within the target image, each feature point corresponding to a predetermined facial feature; pre-processing the image, normalizing the image; generating a response map, updating the feature points using response map, and outputting the final feature points, **characterized in that** the updating the feature points is based on the response map and Taylor-approximation of a cost function.

2. An apparatus for modelling the visual appearance of a human face, within a target image, the apparatus comprising means for initialising a set of feature points within the target image, each feature point corresponding to a predetermined facial feature; means for pre-processing the image, normalizing the image; generating a response map, updating the feature points using response map, and outputting the final feature points, wherein the updating the feature points is based on the response map and Taylor-approximation of a cost function.

3. A computing device for shape registration, the computing device comprising a processor coupled to a memory, the memory comprising computer-program instructions executable by the processor for initialising a set of feature points within the target image, each feature point corresponding to a predetermined facial feature; pre-processing the image, normalizing the image; generating a response map, updating the feature points using response map, and outputting the final feature points, wherein the updating the feature points is based on the response map and Taylor-approximation of a cost function.

Initializing feature
points
100

Pre-processing the
image
101

Iteration finished?
102

YES

NO

Normalizing the image
using current feature
points
103

Final feature points
106

Generating the
response map

104

Updating feature
points using response
map
105

Fig 1

```
        ┌─────────────────────┐
        │ Initializing feature│
        │       points        │
        │                     │
        │         500         │
        └──────────┬──────────┘
                   │
                   ▼
        ┌─────────────────────┐
        │ Pre-processing image│
        │                     │
        │         501         │
        └──────────┬──────────┘
                   │
                   ▼
              ╱─────────╲                          YES
            ╱             ╲
          ╱ Iteration      ╲ ──────────────┐
          ╲  finished?     ╱                │
            ╲    502      ╱                 │
              ╲─────────╱                   │
                   │ NO                      │
                   ▼                         ▼
        ┌─────────────────────┐   ┌─────────────────────┐
        │   Normalizing using │   │ Final feature points│
        │ current feature     │   │                     │
        │     points          │   │         506         │
        │         503         │   └─────────────────────┘
        └──────────┬──────────┘
                   │
                   ▼
        ┌─────────────────────┐
        │ Generating response │
        │        map          │
        │         504         │
        └──────────┬──────────┘
                   │
                   ▼
        ┌─────────────────────┐
        │ Updating feature    │
        │ points using        │
        │ response maps and   │
        │ Taylor-approximation│
        │ of the cost function│
        │         505         │
        └─────────────────────┘
```

Fig 2

**Europäisches Patentamt**
**European Patent Office**
**Office européen des brevets**

# EUROPEAN SEARCH REPORT

Application Number

EP 12 17 1411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WENYI ZHAO ET AL: "FACE PROCESSING : ADVANCED MODELING AND METHODS., CHAPTER 4: 3D MORPHABLE FACE MODEL, A UNIFIED APPROACH FOR ANALYSIS AND SYNTHESIS OF IMAGES", 1 January 2006 (2006-01-01), FACE PROCESSING : ADVANCED MODELING AND METHODS, AMSTERDAM : ELSEVIER, NL, PAGE(S) 127 - 158, XP002672400, ISBN: 978-0-12-088452-0 * eqs. 25-27; page 144 * * Section 4.6 * | 1-3 | INV. G06K9/00 G06K9/62 |
| X | YANG WANG ET AL: "Enforcing convexity for improved alignment with constrained local models", COMPUTER VISION AND PATTERN RECOGNITION, 2008. CVPR 2008. IEEE CONFERENCE ON, IEEE, PISCATAWAY, NJ, USA, 23 June 2008 (2008-06-23), pages 1-8, XP031297366, ISBN: 978-1-4244-2242-5 * Sections 3 and 4 Section 4.1 - eqs. 7, 8 * | 1-3 | |
| X | RARA H ET AL: "Face recognition at-a-distance using texture and sparse-stereo reconstruction", BIOMETRICS: THEORY APPLICATIONS AND SYSTEMS (BTAS), 2010 FOURTH IEEE INTERNATIONAL CONFERENCE ON, IEEE, PISCATAWAY, NJ, USA, 27 September 2010 (2010-09-27), pages 1-6, XP031800500, ISBN: 978-1-4244-7581-0 * Section III, in particular III.E * | 1-3 | TECHNICAL FIELDS SEARCHED (IPC)<br><br>G06K |

-/--

The present search report has been drawn up for all claims

| Place of search | Date of completion of the search | Examiner |
|---|---|---|
| The Hague | 30 January 2013 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 672 425 A1**

Europäisches
Patentamt

European
Patent Office

Office européen
des brevets

# EUROPEAN SEARCH REPORT

Application Number

EP 12 17 1411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CRISTINACCE D ET AL: "Automatic feature localisation with constrained local models", PATTERN RECOGNITION, ELSEVIER, GB, vol. 41, no. 10, 1 October 2008 (2008-10-01), pages 3054-3067, XP022764996, ISSN: 0031-3203, DOI: 10.1016/J.PATCOG.2008.01.024 [retrieved on 2008-02-19] * the whole document * ----- | 1-3 | |
| Y | PAUL RUVOLO ET AL: "Optimization on a Budget: A Reinforcement Learning Approach", NEURAL INFORMATION PROCESSING SYSTEMS, 1 January 2008 (2008-01-01), XP055051632, * Section 3 Reference [9] * ----- | 1-3 | |
| | | | **TECHNICAL FIELDS SEARCHED (IPC)** |

The present search report has been drawn up for all claims

| Place of search | Date of completion of the search | Examiner |
|---|---|---|
| The Hague | 30 January 2013 | Alecu, Teodor Iulian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2360183 A
- US 7292737 B
- WO 2007116208 A

**Non-patent literature cited in the description**

- **D. CRISTINACCE ; T. COOTES.** Automatic feature localisation with constrained local models. *Pattern Recognition,* 2008, vol. 41 (10), 3054-3067
- **J. M. SARAGIH ; S. LUCEY ; J. F. COHN.** Deformable model fitting by regularized landmark mean-shift. *International Journal of Computer Vision,* 2011, vol. 91 (2), 200-215
- **ROWLEY, H. ; BALUJA, S. ; KANADE, T.** Neural network-based face detection. *IEEE Trans. Pattern Anal. Mach. Intell.,* 1998, vol. 20 (1), 23-38
- **S. DUFFNER ; C. GARCIA.** A Connexionist Approach for Robust and Precise Facial Feature Detection in Complex Scenes. *Image and Signal Processing and Analysis,* 2005
- **T. SENECHAL ; L. PREVOST ; S. HANIF.** Neural Network Cascade for Facial Feature Localization. *Fourth Int'l Workshop on Artificial Neural Networks in Pattern Recognition,* 2010, 141
- **YANG WHANG ; SIMON LUCEY ; JEFFREY F. COHN.** Enforcing Convexity for Improved Alignment with Constrained Local Models. *IEEE Conference on Computer Vision and Pattern Recognition,* 2008, 1-8